# EUROPEAN PATENT APPLICATION

(11) **EP 1 162 124 A2**
(43) Date of publication of application: **12.12.2001**
(21) Application number: 01201790.1
(22) Date of filing: 14.05.2001
(51) Int. Cl.: B62D 1/04, F16F 15/00

(54) **Damped steering assembly**

(30) Priority: 09.06.2000 US 210869 P
(71) Applicant: Delphi Technologies, Inc., Troy, MI 48007 (US)
(72) Inventor: Worrell, Barry C., Dayton, OH 45458-6004 (US)
(74) Representative: Denton, Michael John

(57) **Abstract**

A damped steering assembly (10) includes a steering wheel (22) for operative attachment to a steering column (26) of the vehicle (12) and a suspended member (38) connected to the steering wheel (22). The damped steering assembly (10) also includes a mass (46) connected to the suspended member (38). The damped steering assembly (10) further includes at least one damping element (44) positioned on the suspended member (38) to cooperate therewith to actively damp vibration from the steering wheel (22).

## Description

### TECHNICAL FIELD

The present invention relates generally to steering assemblies for vehicles and, more particularly, to a damped steering assembly for a vehicle.

### BACKGROUND OF THE INVENTION

It is known to provide a steering assembly for wheels of a vehicle. The steering assembly typically includes a steering wheel connected to a steering column, which is operatively connected to wheels of the vehicle. It is also known that a driver of a vehicle grips the steering wheel to steer the vehicle. It is further known that most vehicles experience driving conditions having vibrational input to the vehicle. These vibrational inputs include idle shake, rough road, and vehicle system resonance.

One commercial approach to damping the vibration in the steering assembly is to use a rubber mounted damper. Currently, the rubber-mounted damper is added to an inside of a hub area of the steering wheel for vibration damping of the natural frequency of a particular vehicle. However, the rubber-mounted damper is adversely affected by temperature or time. In addition, the rubber-mounted damper can only dampen a target frequency with a +/- 15%. Further, the rubber mounted damper fatigues and changes the target frequency that the damper will cancel out.

It is desirable to provide a damper on a steering assembly for a vehicle to damp vibration. It is also desirable to provide a damped steering assembly for a vehicle. It is further desirable to damp vibration in a steering assembly for a vehicle that eliminates the use of rubber-mounted dampers.

### SUMMARY OF THE INVENTION

It is, therefore, one object of the present invention to provide a damped steering assembly for a vehicle.

It is another object of the present invention to provide a steering assembly with a damper that eliminates the use of a rubber-mounted damper.

To achieve the foregoing objects, the present invention is a damped steering assembly for a vehicle. The damped steering assembly includes a steering wheel for operative attachment to a steering column of the vehicle and a suspended member connected to the steering wheel. The damped steering assembly also includes a mass connected to the suspended member. The damped steering assembly further includes at least one damping element positioned on the suspended member to cooperate therewith to actively damp vibration from the steering wheel.

One advantage of the present invention is that an improved damped steering assembly is provided with a damper to actively damp vibration generated by the vehicle. Another advantage of the present invention is that the damped steering assembly eliminates the rubber-mounted damper, thereby providing a damper, which is not adversely affected by temperature or time. Yet another advantage of the present invention is that the damped steering assembly reduces vibration to the driver, thereby providing a vibration free steering wheel and improving ride and comfort quality for the driver. Still another advantage of the present invention is that the damped steering assembly has a damper that is capable of canceling a broad spectrum of frequencies. A further advantage of the present invention is that the damped steering assembly has a damper that resists fatigue over time.

Other objects, features, and advantages of the present invention will be readily appreciated, as the same becomes better understood, after reading the subsequent description taken in conjunction with the accompanying drawings.

### BRIEF DESCRIPTION OF THE DRAWINGS

Figure 1 is a perspective view of a damped steering assembly, according to the present invention, illustrated in operational relationship with a vehicle.
Figure 2 is an elevational view of the damped steering assembly of Figure 1.
Figure 3 is a perspective view of a portion of the damped steering assembly of Figures 1 and 2.
Figure 4 is a partial perspective view of the damped steering assembly of Figures 1 and 2.

### DESCRIPTION OF THE PREFERRED EMBODIMENT

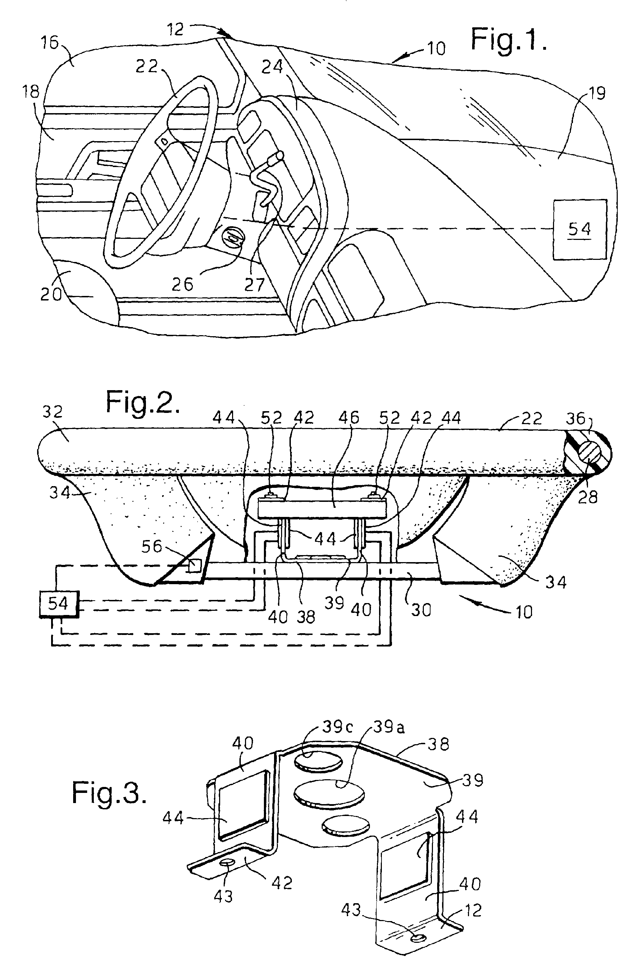

Referring to the drawings and in particular Figure 1, one embodiment of a damped steering assembly 10, according to the present invention, is shown for a vehicle (partially shown) such as a motor vehicle, generally indicated at 12. The motor vehicle 12 includes an engine compartment 14 and occupant compartment 16. The occupant compartment 16 is accessible via a door 18 and includes a seat 20 in which an occupant, namely the driver, may sit. The damped steering assembly 10 includes a steering wheel 22 spaced from an instrument panel 24 in the occupant compartment 16. The damped steering assembly 10 includes a steering column 26 connected to the steering wheel 22 and extending through the occupant compartment 16 into the engine compartment 14. The steering column 26 includes a shifting lever 27 used to control a transmission (not shown) of the motor vehicle 12. It should be appreciated that the steering column 26 is operatively connected to wheels (not shown) of the vehicle. It should also be appreciated that an operator's hands (not shown) typically grip the steering wheel 22 to guide the vehicle 12 in the desired direction.

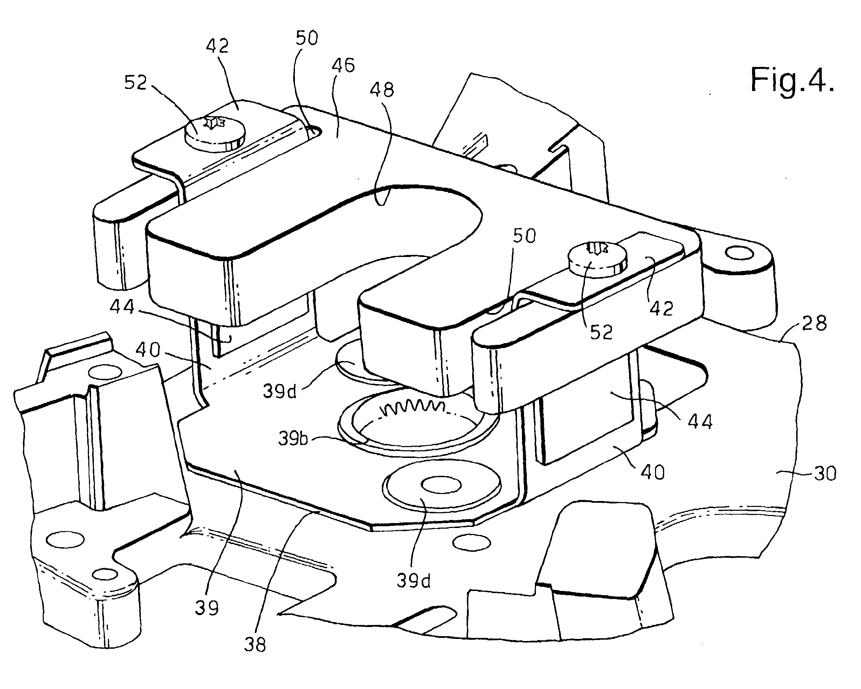

As illustrated in Figures 1 through 4, the steering wheel 22 includes a frame 28 that defines the shape of the steering wheel 22. Preferably, the frame 28 is made from a metal material such as magnesium. The steering wheel 22 includes a hub or inner rim 30, an outer rim 32 circumscribing the inner rim 30 and at least one spoke 34 interconnecting the inner rim 30 with the outer rim 32. The frame 28 of the inner rim 30, outer rim 32, and spoke 34 is integral and one-piece. It should be appreciated that the frame 28 is conventional and known in the art.

The steering wheel 22 also includes a padding member 36 that encloses the frame 28. The padding member 36 cushions the frame 28 to enhance the comfort of the steering wheel 22 for the operator's hands. In this example, the padding member 36 is a cushioning material such as urethane. Advantageously, the padding member 36 may be molded. It should be appreciated that the padding member 36 is conventional and known in the art.

The damped steering assembly 10 includes a suspended member 38 connected to the inner rim 30. The suspended member 38 has a base 39, which is generally rectangular and planar in shape. The base 39 has an aperture 39a extending therethrough to receive a toothed sleeve 39b and a plurality of apertures 39c extending therethrough to receive fasteners 39d to secure the base 39 to the inner rim 30. The suspended member 38 has a pair of opposed support arms 40 extending outwardly and generally perpendicular to the base 39. The suspended member 38 also has a flange 42 extending general parallel to the base mass 39 and perpendicular to the support arm 40. The flanges 42 include an aperture 43 extending therethrough for a function to be described. The suspended member 38 is made from a metal material such as spring steel or a composite material. It should be appreciated that the suspended member 38 is operatively connected via the toothed sleeve 39a to the inner rim 30 and to a shaft (not shown) of the steering column 26 of the vehicle 12. It should be appreciated that the base 39 is supported by two support arms 40 with known stiffnesses characterized by EI (material modulus times section modulus). It should also be appreciated that the steering column 26 is conventional and known in the art.

The damped steering assembly 10 also includes at least one, preferably a plurality of, more preferably four, damping elements 44 positioned on the suspended member 38. The damping element 44 is of a piezoelectric type. An example of the damping element 44 is disclosed in U.S. Patent Nos. 5,656,882 and 5,687,462 to Lazarus et al. and assigned to Active Control Experts, Inc., of Cambridge MA, the disclosures of which are hereby incorporated by reference. The damping element 44 is a QUICKPACK® piezoelectric actuator which is commercially available from Active Control Experts, Inc. The damping element 44 is a generally planar member that extends longitudinally and transversely a suitable amount to a desired surface area of the suspended member 38. The damping element 44 is attached directly onto a surface of the support arm 40 by suitable means such as an adhesive. Preferably, a pair of damping elements 44 are attached to opposed locations on each of the support arms 40 of the suspended member 38 to provide tension and compression on each side of the support arms 40.

The damped steering assembly 10 includes a mass 46 connected to the suspended member 38. The mass 46 is generally rectangular in shape. The mass 46 includes a central recess 48 having a general "U" shape to allow the shaft of the steering column 26 to extend therethough and connect to the toothed sleeve 39b. The mass 46 also includes a side recess 50 spaced from the central recess 48 on both sides thereof. The side recess 50 has a general "U" shape to allow the arms 40 of the suspended member 38 to extend therethrough. The mass 46 is secured to the flanges 42 of the suspended member 38 by suitable means such as fasteners 52 extending through apertures (not shown) in the mass 46 and the apertures 43 in the flanges 42 and engaging the flanges 42. The mass 46 is made of a metal material such as lead.

The damped steering assembly 10 further includes a power source, such as the controller 54, electrically connected by wires (not shown) to each of the damping elements 44. The controller 54 has an amplifier and control (not shown) to apply a voltage to the damping elements 44 to produce active damping.

The damped steering assembly 10 includes an accelerometer 56 connected to the steering wheel 22 and the controller 46. The accelerometer 56 is connected to the inner rim 30 by suitable means such as an adhesive. It should be appreciated that the accelerometer 56 is conventional and known in the art.

In operation, the vehicle 12 produces vibration, which is generated at the natural frequency of the particular vehicle 12, for example between 37 Hz to 38 Hz, at engine idle position. In the damped steering assembly 10, the accelerometer 56 measures the vibrational inputs coming into the steering wheel 22 and feeds that to the controller 54. The controller 54 sends an 180° out of phase signal through the amplifier that applies a voltage to the damping elements 44, which cause them to bend and displace. The displacement of the damping elements 44 causes the suspended member 38 to move out of phase with the vibrational input and cause active damping of the vibrations in the steering wheel 22 to a reduced level. This serves to cancel out the input vibration, thus providing a vibration free feel of the steering wheel 22. It should be appreciated that the number and location of the damping elements 44 can be varied for different reduction levels of the vibration.

The present invention has been described in an illustrative manner. It is to be understood that the terminology, which has been used, is intended to be in the nature of words of description rather than of limitation.

Many modifications and variations of the present invention are possible in light of the above teachings. Therefore, within the scope of the appended claims, the present invention may be practiced other than as specifically described.

## Claims

1. A damped steering assembly (10) for a vehicle (12) comprising:
a steering wheel (22) for operative attachment to a steering column (26) of the vehicle (12);
a suspended member (38) connected to said steering wheel (22);
a mass (46) connected to said suspended member (38); and
at least one damping element (44) positioned on said suspended member (38) to cooperate therewith to actively damp vibration from said steering wheel (22).

2. A damped steering assembly (10) as set forth in claim 1 wherein said suspended member (38) has a base (39) and a plurality of support arms (40) extending from said base (39) and operatively connected to said mass (46).

3. A damped steering assembly (10) as set forth in claim 2 wherein said at least one damping element (44) is attached directly to a surface of one of said support arms (40).

4. A damped steering assembly (10) as set forth in claim 2 including a plurality of damping elements (44) attached to opposed sides of each of said support arms (40).

5. A damped steering assembly (10) as set forth in claim 1 wherein said steering wheel (22) includes an inner rim (30), said suspended member (38) being attached to said inner rim (30).

6. A damped steering assembly (10) as set forth in claim 1 wherein said suspended member (38) is made of either one of a metal material and a composite material.

7. A damped steering assembly (10) as set forth in claim 6 wherein said metal material is spring steel.

8. A damped steering assembly (10) as set forth in claim 1 including an adhesive to attach said at least one damping element (44) to a surface of said mass (46) member.

9. A damped steering assembly (10) as set forth in claim 1 including an accelerometer (56) attached to said steering wheel (22).

10. A damped steering assembly (10) as set forth in claim 9 including a controller (54) electrically connected to said accelerometer (56) and said at least one damping element (44) to apply a voltage thereto to produce active damping in response to a signal from said accelerometer (56).

11. A damped steering assembly (10) for a vehicle (12) comprising:
a steering wheel (22) for operative attachment to a steering column (26) of the vehicle (12);
a suspended member (38) connected to said steering wheel (22), said suspended member (38) being made of either one of a metal material and a composite material;
a mass (46) connected to said suspended member (38); and
a plurality of damping elements (44) positioned on said suspended member (38) to cooperate therewith to actively damp vibration from said steering wheel (22).

12. A damped steering assembly (10) as set forth in claim 11 wherein said suspended member (38) has a base (39) and a plurality of support arms (40) operatively connected to said mass (46).

13. A damped steering assembly (10) as set forth in claim 12 wherein damping elements (44) are located on opposed sides of said support arms (40).

14. A damped steering assembly (10) as set forth in claim 11 wherein metal material is a spring steel.

15. A damped steering assembly (10) as set forth in claim 11 wherein said steering wheel (22) has an inner rim (30), said suspended member (38) being connected to said inner rim (30).

16. A damped steering assembly (10) as set forth in claim 11 including a controller (54) electrically connected to said damping elements (44) to apply a voltage thereto and cause said damping elements (44) to actively vibrate.

17. A damped steering assembly (10) as set forth in claim 11 including an adhesive to attach said damping elements (44) to a surface of said suspended member (38).

18. A damped steering assembly (10) as set forth in claim 16 including an accelerometer (56) connected to said steering wheel (22) and said controller (54).

19. A damped steering assembly (10) for a vehicle (12) comprising:
a steering wheel (22) for operative attachment to a steering column (26) of the vehicle (12);
a suspended member (38) connected to said steering wheel (22), said suspended member (38) being made of either one of a metal material and a composite material;
a mass (46) connected to said suspended member (38);
a plurality of damping elements (44) positioned on said suspended member (38) and adhesively attached thereto; and
a controller (54) electrically connected to said damping elements (44) to apply a voltage thereto and cause said damping elements (44) to actively vibrate to damp vibration from said steering wheel (22).

20. A damped steering assembly (10) as set forth in claim 19 including an accelerometer (56) connected to said steering wheel (22) and said controller (54).
